(19) Europäisches Patentamt
European Patent Office
Office européen des brevets

(11) **EP 3 809 490 B1**

(12) **EUROPEAN PATENT SPECIFICATION**

(45) Date of publication and mention
of the grant of the patent:
**06.07.2022 Bulletin 2022/27**

(21) Application number: **20201486.6**

(22) Date of filing: **13.10.2020**

(51) International Patent Classification (IPC):
*H01M 4/04* (2006.01)     *H01M 10/0525* (2010.01)
*H01M 4/80* (2006.01)     *H01M 4/66* (2006.01)

(52) Cooperative Patent Classification (CPC):
**H01M 10/0525; H01M 4/0402; H01M 4/0404;
H01M 4/0416; H01M 4/043; H01M 4/661;
H01M 4/808;** Y02E 60/10; Y02P 70/50

(54) **ELECTRODE FOR LITHIUM ION SECONDARY BATTERIES AND LITHIUM ION SECONDARY BATTERY**

ELEKTRODE FÜR LITHIUM-IONEN-SEKUNDÄRBATTERIE SOWIE
LITHIUM-IONEN-SEKUNDÄRBATTERIE

ÉLECTRODE POUR BATTERIES SECONDAIRES LITHIUM-ION ET BATTERIE SECONDAIRE
LITHIUM-ION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.10.2019 JP 2019188758**

(43) Date of publication of application:
**21.04.2021 Bulletin 2021/16**

(73) Proprietors:
• **HONDA MOTOR CO., LTD.
Minato-ku
Tokyo 107-8556 (JP)**
• **SUMITOMO ELECTRIC INDUSTRIES, LTD.
Osaka-shi, Osaka 541-0041 (JP)**

(72) Inventors:
• **TANAAMI, Kiyoshi
Saitama, 351-0193 (JP)**
• **ISOGAI, Yuji
Saitama, 351-0193 (JP)**
• **AOYAGI, Shintaro
Saitama, 351-0193 (JP)**
• **SAKAI, Hideki
Saitama, 351-0193 (JP)**
• **OKUNO, Kazuki
Osaka-shi, Osaka-fu, 541-0041 (JP)**
• **HOSOE, Akihisa
Osaka-shi, Osaka-fu, 541-0041 (JP)**
• **SENOO, Kikuo
Osaka-shi, Osaka-fu, 541-0041 (JP)**
• **TAKEBAYASHI, Hiroshi
Osaka-shi, Osaka-fu, 541-0041 (JP)**

(74) Representative: **Herzog, Markus
Weickmann & Weickmann
Patent- und Rechtsanwälte PartmbB
Postfach 860 820
81635 München (DE)**

(56) References cited:
**US-A1- 2012 263 993     US-A1- 2012 328 941
US-A1- 2015 132 659     US-A1- 2019 198 883**

**Description**

BACKGROUND OF THE INVENTION

Field of the Invention

The present invention relates to an electrode for lithium ion secondary batteries, and a lithium ion secondary battery made using this electrode for lithium ion batteries.

Related Art

Thus far, lithium ion secondary batteries are becoming widespread as secondary batteries having high energy density.
Lithium ion secondary batteries have a structure made by having a separator between the positive electrode and negative electrode, and filling a liquid electrolyte (electrolytic solution).
Herein, since the electrolytic solution of the lithium ion secondary battery is usually a combustible organic solution, there have been cases where the stability to heat in particular is a problem. Therefore, in place of an organic-based liquid electrolyte, a lithium ion solid-state battery made using an inorganic-based solid electrolyte has been proposed (refer to Patent Document 1).
For such a lithium ion secondary battery, there are various requirements according to the application, and in the case of the application being an automobile or the like, for example, there is a demand for further raising the volume energy density.
To address this, methods for increasing the filling density of electrode active material can be exemplified.
As a method of increasing the filling density of electrode active material, it has been proposed to use foam metal as the collector constituting the positive electrode layer and the negative electrode layer (refer to Patent Documents 2 and 3).
The foam metal has a network structure with uniform micropore size, and large surface.
By filling the electrode mixture containing the electrode active material inside of this network structure, it is possible to increase the amount of active material per unit area of the electrode layer.

Patent Document 1: Japanese Unexamined Patent Application, Publication No. 2000-106154
Patent Document 2: Japanese Unexamined Patent Application, Publication No. H7-099058
Patent Document 3: Japanese Unexamined Patent Application, Publication No. H8-329954

US 2019/198 883 A1 discloses an electrode for lithium ion secondary batteries, the electrode comprising:

a current collector; and an electrode mixture containing electrode active material,
wherein the current collector is a foam porous body consisting of metal, such as copper or aluminum,
wherein the electrode mixture is filled into pores of the foam porous body, and
wherein the electrode for lithium ion secondary batteries is rectangular, and a current collector region having no active material present, and where a current collector tab protrudes.

SUMMARY OF THE INVENTION

However, in a conventional electrode made using foam metal as the collector, since the metal density in the current collector area contacting the tab is low compared to an electrode made using metal foil as the collector, the electron conductivity is inferior, a result of which the heat dissipation declines by the electron resistance becoming great, and thermal conductivity declining.
The present invention has been made taking account of the above, and an object thereof is to provide an electrode for lithium ion secondary batteries, and a lithium ion secondary battery made using this electrode for lithium ion secondary batteries, which can suppress an increase in electron resistance of a current collector area, and thus improve heat dissipation in an electrode for lithium ion secondary batteries which establishes a foam metal body as the collector.
The present inventors have carried out thorough examination in order to solve the above problem.
Then, it was found that, if establishing the electrode shape of an electrode for lithium ion secondary batteries made using a foam porous body consisting of metal as the collector into a rectangular shape, and making a current collector region span at least two adjacent sides, it is possible to suppress an increase in electron resistance of the current collector area, and thus improve the heat dissipation, thereby arriving at completion of the present invention.

The present invention provides an electrode for lithium ion secondary batteries according to claim 1. The electrode includes: a current collector; and an electrode mixture containing electrode active material, in which the current collector is a foam porous body consisting of metal, the electrode mixture is filled into pores of the foam porous body, and the electrode for lithium ion secondary batteries is rectangular, and a region spanning at least two adjacent sides is defined as a current collector region.

A current collector tab may be connected to the current collector region.

A metal foil may be laminated on the foam porous body in the current collector region.

Thickness of the electrode for lithium ion secondary batteries may be at least 250 $\mu$m.

The foam porous body may be foam aluminum.

The electrode for lithium ion secondary batteries may be a positive electrode.

Density of the electrode mixture may be in the range of 2.5 to 3.8 g/cm$^3$.

Average particle size of the electrode active material may be no more than 10 $\mu$m.

The foam porous body may be foam copper.

The electrode for lithium ion secondary batteries may be a negative electrode.

Density of the electrode mixture may be in the range of 0.9 to 1.8 g/cm$^3$.

Average particle size of the electrode active material may be no more than 20 $\mu$m.

In addition, another aspect of the present invention is a lithium ion secondary battery including an electrode laminate in which a plurality of unit laminated bodies having a positive electrode and a negative electrode laminated via a separator or solid-state electrolyte layer is laminated,

In the lithium ion secondary battery, the thickness of the electrode for lithium ion secondary batteries may be at least three times the thickness of another electrode constituting the electrode laminate.

According to the electrode for lithium ion secondary batteries of the present invention, it is possible to suppress an increase in electron resistance of a current collector area and improve the heat dissipation, even in the case of using a foam metal body as the current collector.

BRIEF DESCRIPTION OF THE DRAWINGS

FIG. 1 is a view showing a state of punch processing of a positive electrode for lithium ion secondary batteries of Example 1;

FIG. 2 is a view showing the configuration of an electrode laminate of Example 1;

FIG. 3 is a view showing a state of punch processing of a positive electrode for lithium ion secondary batteries of Comparative Example 1;

FIG. 4 is a view showing the laminate configuration of two sides of a current collector region of each electrode of Example 2;

FIG. 5 is a view showing the configuration of an electrode laminate of Example 9; and

FIG. 6 is a view showing the configuration of an electrode laminate of Comparative Example 2.

DETAILED DESCRIPTION OF THE INVENTION

An embodiment of the present invention will be explained hereinafter.

<Electrode for Lithium Ion Secondary Batteries>

The electrode for lithium ion secondary batteries of the present invention includes: a current collector, and an electrode mixture containing an electrode active material, in which the current collector is a foam porous body consisting of metal, and the electrode mixture is filled into the pores of the foam porous body. The electrode for lithium ion secondary batteries of the present invention is rectangular, and established a region spanning at least two adjacent sides as a current collector region.

The batteries to which the electrode for lithium ion secondary batteries of the present invention can be applied are not particularly limited. It may be a liquid lithium ion secondary battery including a liquid electrolyte, or may be a solid-state battery including a solid or gel electrolyte. In addition, in the case of applying in a battery including a solid or gel electrolyte, the electrolyte may be organic or may be inorganic.

In addition, the electrolyte for lithium ion secondary batteries of the present invention can be used without problem even if be applied to the positive electrode of a lithium ion secondary battery, applied to the negative electrode, or applied to both.

When comparing the positive electrode and negative electrode, since the electron conductivity of the active material which can be used in the negative electrode is high, the electrode for lithium ion secondary batteries of the present invention can acquire a higher effect when used in the positive electrode.

Furthermore, in the case of applying the electrode for lithium ion secondary batteries of the present invention to an electrode laminate constituting a single cell of the lithium ion battery, it may be used as the positive electrode or may be used as the negative electrode, as described above.

Furthermore, it may be used as all electrodes constituting the electrode laminate, or may be used only as part of the electrode.

(Shape of Electrode)

The shape of the electrode for lithium ion secondary batteries of the present invention is rectangular.

By being rectangular, in the case of applying to a battery, it is possible to form an electrode laminate in which a plurality of electrodes is laminated.

For example, in the case of the electrode of a winding structure in a battery of cylindrical shape, the distance from the current collector tab is long due to the electrode becoming longer.

For this reason, even if the thermal conductivity is high, the heat dissipation will decline.

The shape of the electrode for lithium ion secondary batteries of the present invention is rectangular, and due to being able to configure the electrode laminate which is a laminate structure of rectangular shape, it is possible to arrange the current collector tab in each electrode, and possible to maintain the distance from the current collector tab to be short.

As a result, the thermal conductivity improves, and thus heat dissipation improves.

(Current Collector Region of Electrode)

The shape of the electrode for lithium ion secondary batteries of the present invention is rectangular as mentioned above; however, it is characterized by establishing the current collector region thereof as a region spanning at least two adjacent sides.

So long as spanning at least two adjacent sides, it is possible to receive the effects of the present invention, for example, there are no problems even if a region spanning three sides.

In the electrode made using a foam porous body consisting of metal as the current collector, the current collector region becomes a region in which the electrode mixture is not filled.

For this reason, the metal density of the current collector region becomes lower compared to an electrode with metal foil as the current collector.

As a result thereof, the electrode made with the foam porous body consisting of metal as the current collector, the electron conductivity is inferior, the electron resistance is high, the thermal conductivity declines, and thus the heat dissipation declines.

In the present invention, by establishing the current collector region as a region spanning at least two adjacent sides of the electrode of rectangular shape, the dispersion of the flow of electrons is achieved, whereby electron resistance is suppressed to improve heat dissipation.

In addition, by establishing a region spanning at least two adjacent sides in the electrode of rectangular shape as the current collector region, it is possible to shorten the migration distance of electrons, and thus possible to suppress electron resistance more effectively.

The current collector tab is preferably connected to the current collector region of the electrode for lithium ion secondary batteries of the present invention.

In addition, the current collector region of the electrode for lithium ion secondary batteries of the present invention, as mentioned above, becomes a region in which the electrode mixture is not filled. Therefore, it is preferable to laminate the metal foil on the foam porous body.

In other words, it is preferable for a current collector component such as a current collector tab to be connected to the current collector region of the foam porous body which is the current collector, and the metal foil to be laminated thereon.

By laminating the metal foil on the current collector region of the foam porous body, it is possible to raise the metal density per area, suppress electron resistance, and further improve heat dissipation.

It should be noted that the type of metal of the metal foil laminated is not particularly limited; however, it is preferably the same metal as the metal constituting the material of the current collector.

So long as being the same metal, the lamination will be easy, and adhesion strength also improves.

The method of laminating the metal foil is not particularly limited; however, it is preferably established as non-heated welding, for example.

As the non-heated welding, ultrasonic welding can be exemplified.

By laminating by non-heated welding, the reduction in thermal influence on members, and the reproducibility of the welded state increase.

(Thickness of Electrode)

The electrode for lithium ion secondary batteries of the present invention preferably has a thickness of at least 250 $\mu$m.

In more detail, in the case of the electrode for lithium ion secondary batteries of the present invention being a positive electrode, the thickness is preferably 250 to 350 $\mu$m, and more preferably in the range of 270 to 340 $\mu$m.

In addition, in the case of the electrode for lithium ion secondary batteries of the present invention being a negative electrode, the thickness is preferably 250 to 600 $\mu$m, and more preferably in the range of 270 to 560 $\mu$m.

If the thickness of the electrode for lithium ion secondary batteries is at least 250 $\mu$m, since the filling density of the electrode active material will be sufficiently high, it is possible to realize sufficient volume energy density, and possible to apply also in a case of establishing the use thereof as automobiles or the like, for example.

(Current Collector)

The current collector used in the electrode for lithium ion secondary batteries of the present invention is a foam porous body consisting of metal.

As the foam porous body consisting of metal, so long as being a porous body of metal having voids due to foaming, it is not particularly limited.

The metal foam has a network structure of uniform pore size, in which the surface volume is high.

By using a foam porous body consisting of metal as the current collector, it is possible to fill the electrode mixture containing electrode active material inside of this network structure, and thus possible to increase the active material amount per unit volume of the electrode layer, and possible to improve the volume energy density of the lithium ion secondary battery.

In addition, since immobilization of the electrode mixture becomes easy, it is possible to thicken the electrode mixture layer without thickening the coating slurry serving as the electrode mixture. Then, it is possible to decrease the binding agent consisting of organic polymer which was necessary in thickening.

Therefore, comparing with the electrode using a conventional metallic foil as the current collector, it is possible to thicken the electrode mixture layer, without leading to an increase in resistance, a result of which it is possible to increase the volume per unit area of the electrode, and contribute to the capacity increase of the lithium ion secondary battery.

In addition, the foam porous body consisting of metal has convexities and concavities of submicron size in the surface thereof. By the electrode active material penetrating inside of the framework having convexities and concavities in the surface, since the contact between the metal forming the foam porous body and the electrode active material will be favorable, it is possible to improve the heat dissipation in the active material particle units.

Furthermore, the electrode using the foam porous body consisting of metal as the current collector, a part of the framework of the foam porous body exists reaching until the topmost surface of the electrode mixture.

In other words, the metal framework of the foam porous body reaches until the face contacting an adjacent separator, etc. As a result thereof, the thermal conductivity of the lithium ion secondary battery improves, whereby it is possible to improve heat dissipation.

As the metal constituting the foam porous body, for example, nickel, aluminum, stainless steel, titanium, copper, silver, etc. can be exemplified.

Among these, as the current collector constituting the positive electrode, a foam aluminum is preferable, and as the current collector constituting the negative electrode, a foam copper can be preferably used.

(Electrode Mixture)

In the present invention, the electrode mixture filled into the current collector of the foam porous body at least includes the electrode active material.

The electrode mixtures which can be applied to the present invention may optionally include other components, so long as including the electrode active material as an essential component.

The other components are not particularly limited, and it is sufficient so long as being a component which can be used upon preparing the lithium ion secondary battery.

For example, a solid-state electrode, conductive auxiliary agent, organic polymer compound serving as a binding agent, etc. can be exemplified.

(Positive Electrode Mixture)

In the case of the electrode mixture constituting the positive electrode, it may include at least the positive electrode active material, and as other components, may include a solid-state electrolyte, conduction auxiliary agent, binding agent, etc., for example.

As the positive electrode active material, so long as being a material which can occlude and release lithium ions, it is not particularly limited; however, $LiCoO_2$, $LiCoO_4$, $LiMn_2O_4$, $LiNiO_2$, $LiFePO_4$, lithium sulfide, sulfur, etc. can be exemplified.

(Negative Electrode Mixture)

In the case of the electrode mixture constituting the negative electrode, it may include at least the negative electrode active material, and as other components, may include a solid-state electrolyte, conduction auxiliary agent, binding agent, etc., for example.

As the negative electrode active material, although not particularly limited so long as being able to occlude and release lithium ions, for example, it is possible to exemplify metallic lithium, lithium alloy, metal oxide, metal sulfide, metal nitride, silicon oxide, silicon, and carbon materials such as graphite.

(Average Particle Size of Electrode Active Material)

The average particle size of the electrode active material which is an essential constituent component of the electrode mixture is not particularly limited so long as being a size which can be filled into the network structure of the foam porous body consisting of metal; however, in the case of the electrode for lithium ion secondary batteries of the present invention being the positive electrode, the average pore size of the positive electrode active material is preferably no more than 10 $\mu$m.

It is more preferably no more than 7 $\mu$m.

In addition, in the case of the electrode for lithium ion secondary batteries of the present invention being the negative electrode, the average pore size of the negative electrode active material is preferably no more than 20 $\mu$m.

It is more preferably no more than 15 $\mu$m.

In the case of the average particle size of the electrode active material being large, when filling the electrode active material into the foam porous body serving as the current collector, voids appear between the electrode active material and the foam porous body, a result of which the thermal conductivity declines, and heat dissipation is poor.

So long as the average pore size of the electrode active material is no more than 10 $\mu$m, since it is possible to ensure sufficient contact property, it will be possible to further improve the thermal conductivity.

Furthermore, in the present invention, so long as the pore size of the electrode active material is uniform, it is still preferable.

(Density of Electrode Mixture)

The density of the electrode mixture constituting the electrode for lithium ion secondary batteries of the present invention, in the case the electrode for lithium ion secondary batteries of the present invention being the positive electrode, is preferably 2.5 to 3.8 g/cm$^3$. More preferably, it is in the range of 2.9 to 3.6 g/cm$^3$.

In addition, in the case of the electrode for lithium ion secondary batteries of the present invention being the negative electrode, the density of the electrode mixture is preferably 0.9 to 1.8 g/cm$^3$.

More preferably, it is in the range of 1.0 to 1.7 g/cm$^3$.

So long as the density of the electrode mixture is in the above-mentioned range, since it is possible to further improve the contact property between the foam porous body serving as the current collector and the electrode active material, it is possible to further suppress electron resistance.

As a result, it is possible to further improve the thermal conductivity, and thus possible to further suppress heat generation.

It should be noted that, as the method of setting the density of the electrode mixture to the above-mentioned ranges, for example, a method can be exemplified which fills an electrode mixture slurry into the foam porous body, and then presses with a pressure of 100 to 2000 kg/cm.

At this time, when raising the temperature of pressing, it is possible to further improve the contact property between the foam porous body and electrode active material, and thus possible to further enhance the effects.

<Production Method of Electrode for Lithium Ion Secondary Batteries>

The production method of the electrode for lithium ion secondary batteries of the present invention is not particularly limited, and can adopt a usual method in the present technical field.

The electrode for lithium ion secondary batteries of the present invention is characterized by using a foam porous body consisting of metal as the current collector, and the electrode mixture being filled into this current collector. The method of filling the electrode mixture into the current collector is not particularly limited; however, a method of filling a slurry containing the electrode mixture with pressure inside of the network structure of the current collector using a plunger-type die coater can be exemplified.

Alternatively, a method by differential pressure filling can be exemplified which generates a pressure differential between a face of the current collector on which placing the electrode mixture and the back face thereto, passing through the holes forming the network structure of the current collector by way of the pressure differential to cause the electrode mixture to penetrate and fill inside of the current collector.

The nature of the electrode mixture in the case of differential pressure filling is not particularly limited, and may be a dry method which employs powder, or may be a wet method which employs a mixed material containing liquid such as a slurry.

In order to raise the filling amount of the electrode active material, it is preferable to fill the electrode mixture into the entire area of voids in the network structure.

After filling the electrode mixture, it is possible to obtain the electrode for lithium ion secondary batteries employing a usual method in the present technical field.

For example, the electrode for lithium ion secondary batteries is obtained by drying the current collector in which the electrode mixture has been filled, then pressing, and ultimately punching into a rectangular shape.

It is possible to improve the density of the electrode mixture by pressing, and possible to adjust so as to be the desired density.

Subsequently, the region spanning at least two adjacent sides is applied as the current collector region, and at this time, a current collector tab is connected to the current collector region as necessary.

<Lithium Ion Secondary Battery>

The lithium ion secondary battery of the present invention includes an electrode laminate in which a plurality of unit laminates in which a positive electrode and a negative electrode are laminated via a separator or solid-state electrolyte layer is laminated.

Then, as the unit laminate in the center of the electrode laminate, at least one of the positive electrode and negative electrode is the above-mentioned electrode for lithium ion secondary batteries of the present invention.

In the lithium ion secondary battery, the center of the cell, i.e. center of the electrode laminate, has large thermal storage.

For this reason, by establishing at least one of the positive electrode and negative electrode of a unit laminate at the center of the electrode laminate as the electrode for lithium ion secondary batteries of the present invention, it is possible to promote heat dissipation of the battery.

In the lithium ion secondary battery of the present invention may be a battery for lithium ion secondary batteries, it is sufficient so long as at least one of the positive electrode and negative electrode of a unit laminate body located at the central part of the electrode laminate is the above-mentioned electrode for lithium ion secondary batteries of the present invention; however, the electrode for lithium ion secondary batteries of the present invention may be used to span not only at the central part, but rather the entire region of the electrode laminate.

In addition, in the case of applying the electrode for lithium ion secondary batteries of the present invention at locations other than the center of the electrode laminate, the electrode for lithium ion secondary batteries of the present invention may have the application part to the positive electrode and the application part to the negative electrode coexisting.

The thickness of the electrode for lithium ion secondary batteries of the present invention is preferably at last three times the thickness of one sheet of an electrode other than the electrode for lithium ion secondary batteries of the present invention, constituting the electrode laminate of the lithium ion secondary battery.

More preferably, it is least two times.

Regarding the lithium ion secondary battery, the migration distance of lithium ions becomes longer as the thickness of the electrode mixture layer becomes thicker.

As a result thereof, the input and output for a long time, i.e. discharging and charging, becomes difficult, and thus the rate characteristic declines.

In the electrode laminate of the lithium ion secondary battery of the present invention, by including an electrode which is no more than 1/3 of the thickness of the electrode for lithium ion secondary batteries of the present invention as the electrode other than the electrode for lithium ion secondary batteries of the present invention, since it is possible to shorten the migration distance of ions, it is possible to improve the rate characteristic, a result of which it is possible to achieve both an improvement in thermal conductivity and improvement in rate characteristic.

In the lithium ion secondary battery of the present invention, the positive electrode or the negative electrode not adopting the electrode for lithium ion secondary batteries of the present invention is not particularly limited, and may be any electrode functioning as the positive electrode and negative electrode of a lithium ion secondary battery.

The positive electrode and negative electrode constituting the lithium ion secondary battery can constitute any battery by selecting two types from among materials which can constitute electrodes, comparing the charge/discharge potentials of the two types of compounds, then using one exhibiting electropositive potential as the positive electrode, and one exhibiting electronegative potential as the negative electrode.

(Separator)

In the case of the lithium ion secondary battery of the present invention containing a separator, the separator is located between the positive electrode and the negative electrode.

The material, thickness, etc. thereof are not particularly limited, and it is possible to adopt a known separator which can be applied to a lithium ion secondary battery.

(Solid-State Electrolyte Layer)

In the case of the lithium ion secondary battery of the present invention containing a solid-state electrolyte layer, the solid-state electrolyte layer is located between the positive electrode and the negative electrode.

The solid-state electrolyte contained in the solid-state electrolyte layer is not particularly limited, and is sufficient so long as lithium ion conduction between the positive electrode and negative electrode is possible.

For example, an oxide-based electrolyte or sulfide-based electrolyte can be exemplified.

EXAMPLES

Examples, etc. of the present invention will be explained hereinafter; however, the present invention is not to be limited to these Examples, etc.

<Example 1>

(Production of Positive Electrode for Lithium Ion Secondary Batteries) (Preparation of Positive Electrode Mixture Slurry)

$LiNi_{0.5}Co_{0.2}Mn_{0.3}O_2$ was prepared as the positive electrode active material. The positive electrode mixture slurry was produced by mixing 94 mass% positive electrode active material, 4 mass% carbon black as the conduction auxiliary agent, and 2 mass% polyvinylidene fluoride (PVDF) as a binder, and dispersing the obtained mixture in the appropriate amount of N-methyl-2-pyrrolidone (NMP).

The average particle size of the positive electrode active material $LiNi_{0.5}Co_{0.2}Mn_{0.3}O_2$ used was 5 $\mu$m.

(Formation of Positive Electrode Mixture)

A foam aluminum having a thickness of 1.0 mm, porosity of 95%, cell number of 46-50 per inch, pore size of 0.5 mm, and specific surface area of 5000 $m^2/m^3$ was prepared as the current collector.

Using a plunger-type die coater, the prepared positive electrode mixture was coated onto the current collector so as have a coating amount of 90 $mg/cm^2$.

By drying for 12 hours at 120°C in vacuum and then roll pressing with 15 tons pressure, the positive electrode for lithium ion secondary batteries in which electrode mixture was filled into the pores of the foam aluminum was produced.

The electrode mixture of the obtained positive electrode for lithium ion secondary batteries obtained had a basis weight of 90 $mg/cm^2$, and density of 3.2 $g/cm^3$.

In addition, the total thickness of the current collector and electrode mixture was 319 $\mu$m.

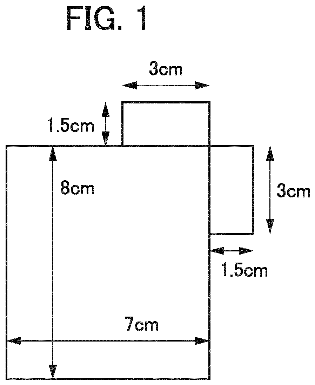

Next, as shown in FIG. 1, 8 cm length and 7 cm width of the coated region of the electrode mixture was made the current collector region, and two adjacent sides of the current collector (foam aluminum) of the uncoated region of the electrode mixture contacting this coated region was notch processed to 1.5 cm length x 3 cm width, and used as the positive electrode for lithium ion secondary batteries.

(Production of Negative Electrode for Lithium Ion Secondary Batteries)

(Preparation of Negative Electrode Mixture Slurry)

A negative electrode mixture slurry was produced by mixing 96.5 mass% of natural graphite (average particle size: 13 $\mu$m) as the negative electrode active material, 1 mass% of acetylene black as a conduction auxiliary agent, 1.5 mass% of styrene-butadiene rubber (SBR) as a binder, and 1 mass% of sodium carboxymethyl cellulose (CMC) as a thickening agent, and dispersing the obtained mixture in the appropriate amount of distilled water.

(Formation of Negative Electrode Mixture)

As the current collector, foam copper having a thickness of 1.0 mm, porosity of 95%, cell number of 46 to 50 per inch, pore size of 0.5 mm, and specific surface area of 5000 $m^2/m^3$ was prepared as the current collector.

The produced negative electrode mixture slurry was coated onto the current collector using a plunger-type die coater so as to make a coating amount of 44.5 $mg/cm^2$.

By drying for 12 hours at 120°C in vacuum and then roll pressing with 10 tons pressure, the negative electrode for lithium ion secondary batteries in which the electrode mixture was filled into the pores of the foam copper was produced.

The electrode mixture of the obtained negative electrode for lithium ion secondary batteries obtained had a basis weight of 44.5 $mg/cm^2$, and density of 1.5 $g/cm^3$.

In addition, the total thickness of the current collector and electrode mixture was 280 $\mu$m.

Next, 88 mm length and 77 mm width of the coated region of the electrode mixture was made the current collector region, and two adjacent sides of the current collector (foam copper) of the uncoated region of the electrode mixture contacting this coated region was notch processed to 1.5 cm length x 3 cm width, and used as the negative electrode for lithium ion secondary batteries.

(Production of Lithium Ion Secondary Battery)

A microporous membrane made into a three-layer laminate of polypropylene/ polyethylene/ polypropylene of 25 $\mu$m thickness was prepared as the separator, and punched to a size of 100 mm length x 90 mm width.

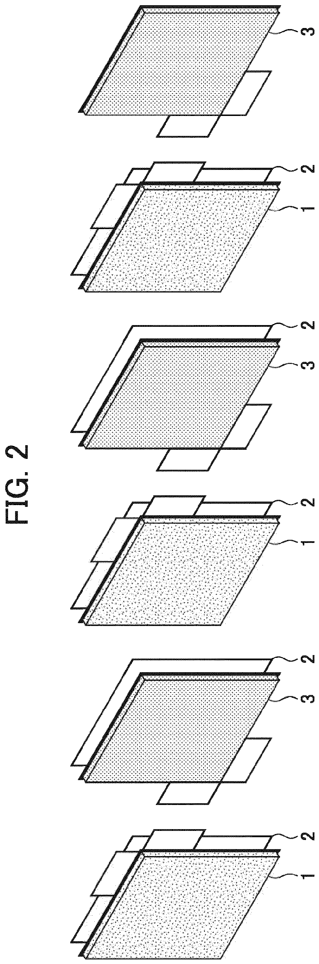

As shown in FIG. 2, the positive electrode for lithium ion secondary batteries and the negative electrode for lithium ion secondary batteries obtained as described above were stacked in the order of positive electrode/ separator/negative electrode/separator/positive electrode/separator/negative electrode/separator/positive electrode/ separator/negative electrode to produce the electrode laminate (positive electrode: total three layers, negative electrode: total three layers)

Subsequently, a tab lead was bonded with ultrasonic welding to two sides of the current collector region of each electrode.

Inside of the product of heat sealing an aluminum laminate for secondary batteries and processing into a bag shape, an electrode laminate to which tab leads were weld bonded was inserted to produce the laminate cell.

As the electrolytic solution, a solution was prepared in which 1.2 moles of $LiPF_6$ was dissolved in a solvent prepared by mixing ethylene carbonate, dimethyl carbonate and ethyl methyl carbonate in the volumetric ratio of 3:4:3, then injected into the above-mentioned laminate to produce the lithium ion secondary battery.

<Comparative Example 1: One Side Current collector Region>

(Production of Positive Electrode for Lithium Ion Secondary Batteries)

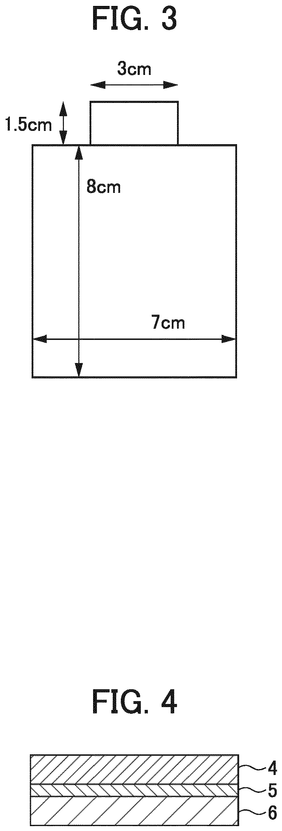

As shown in FIG. 3, 8 cm length and 7 cm width of the coated region of the electrode mixture was made the current collector region, and other than only one side of the current collector (foam aluminum) of the uncoated region of the electrode mixture contacting this coated region being notch processed to 1.5 cm length x 3 cm width, the positive electrode for lithium ion secondary batteries was produced similarly to Example 1.

(Production of Negative Electrode for Lithium Ion Secondary Batteries) 88 mm length and 77 nm width of the coated region of the electrode mixture was made the current collector region, and other than only one side of the current collector (foam copper) of the uncoated region of the electrode mixture contacting this coated region being notch processed to 1.5 cm length x 3 cm width, the negative electrode for lithium ion secondary batteries was produced similarly to Example 1.

(Production of Lithium Ion Secondary Battery)

A lithium ion secondary battery was produced similarly to Example 1.

<Example 2: with Metal Foil>

(Production of Positive Electrode for Lithium Ion Secondary Batteries)

The positive electrode for lithium ion secondary batteries was produced similarly to Example 1.

(Production of Negative Electrode for Lithium Ion Secondary Batteries)

The negative electrode for lithium ion secondary batteries was produced similarly to Example 1.

(Production of Lithium Ion Secondary Battery)

An electrode laminate containing three layers of the positive electrode and three layers of the negative electrode was produced similarly to Example 1.

Next, metal foil was laminated on the current collector region. More specifically, as shown in FIG. 4, for each positive electrode, aluminum foil of 15 $\mu$m punched to the same size as the current collector region was fixed to two sides of the current collector region, the tab lead was fixed to the top thereof, and the aluminum foil and tab lead were bonded with ultrasonic welding to the foam aluminum of the current collector region.
In addition, for each negative electrode, copper foil of 8 $\mu$m punched to the same size as the current collector region was fixed to two sides of the current collector region, a tab lead was fixed to the top thereof, and the copper foil and tab lead were bonded with ultrasonic welding to the foam copper of the current collector region.

After laminating the metal foil to the current collector region, the lithium ion secondary battery was produced similarly to Example 1.

<Example 3: Thickness of Metal Foil + Electrode Mixture>

(Production of Positive Electrode for Lithium Ion Secondary Battery)

The positive electrode mixture slurry was produced similarly to Example 1, and other than coating the produced positive electrode mixture slurry onto the current collector using a plunger-type die coater so as to make a coating amount of 50 mg/cm$^2$, the positive electrode for lithium ion secondary batteries was produced similarly to Example 1.

The obtained electrode mixture of the positive electrode for lithium ion secondary batteries had a basis weight of 50 mg/cm$^2$, and density of 3.2 g/cm$^3$.
In addition, the total thickness of the current collector and electrode mixture was 170 $\mu$m.

(Production of Negative Electrode for Lithium Ion Secondary Batteries)

The negative electrode mixture slurry was produced similarly to Example 1, and other than coating the produced negative electrode mixture slurry onto the current collector using a plunger-type die coater so as to make a coating amount of 25 mg/cm$^2$, the negative electrode for lithium ion secondary batteries was produced similarly to Example 1.

The obtained electrode mixture of the positive electrode for lithium ion secondary batteries had a basis weight of 25 mg/cm$^2$, and density of 1.5 g/cm$^3$.
In addition, the total thickness of the current collector and electrode mixture was 180 $\mu$m.

(Production of Lithium Ion Secondary Battery)

Other than using the positive electrode and negative electrode for lithium ion secondary batteries obtained, an electrode laminate in which three layers of the positive electrode and three layers of the negative electrode were stacked was formed similarly to Example 2. Next, the aluminum foil was laminated on two sides of the current collector region of each positive electrode and the tab lead was bonded with ultrasonic welding, and then copper foil was laminated on two sides of the current collector region of each negative electrode and the tab lead was bonded with ultrasonic welding to produce the lithium ion secondary battery.

<Example 4: Average Particle Size of Positive Electrode Active Material>

(Production of Positive Electrode for Lithium Ion Secondary Batteries)

In the production of the positive electrode for lithium ion secondary batteries, other than setting the average particle size of the positive electrode active material $LiNi_{0.5}Co_{0.2}Mn_{0.3}O_2$ used as 7 $\mu$m, the positive electrode for lithium ion secondary batteries was produced similarly to Example 1.

(Production of Lithium Ion Secondary Battery)

Other than using the positive electrode for lithium ion secondary batteries obtained, an electrode laminate in which three layers of the positive electrode and three layers of the negative electrode were stacked was formed similarly to Example 2.
Next, the aluminum foil was laminated on two sides of the current collector region of each positive electrode and the tab lead was bonded with ultrasonic welding, and then copper foil was laminated on two sides of the current collector region of each negative electrode and the tab lead was bonded with ultrasonic welding to produce the lithium ion secondary battery.

<Example 5: Average Particle Size of Positive Electrode Active Material>

(Production of Positive Electrode for Lithium Ion Secondary Batteries)

In the production of the positive electrode for lithium ion secondary batteries, other than setting the average particle size of the positive electrode active material $LiNi_{0.5}Co_{0.2}Mn_{0.3}O_2$ used as 12 $\mu$m, the positive electrode for lithium ion secondary batteries was produced similarly to Example 1.

(Production of Lithium Ion Secondary Battery)

Other than using the positive electrode for lithium ion secondary batteries obtained, an electrode laminate in which three layers of the positive electrode and three layers of the negative electrode were stacked was formed similarly to Example 2.
Next, the aluminum foil was laminated on two sides of the current collector region of each positive electrode and the tab lead was bonded with ultrasonic welding, and then copper foil was laminated on two sides of the current collector region of each negative electrode and the tab lead was bonded with ultrasonic welding to produce the lithium ion secondary battery.

<Example 6: Thickness of Positive Electrode Mixture>

(Production of Positive Electrode for Lithium Ion Secondary Batteries)

The positive electrode mixture slurry was produced similarly to Example 1, and the produced positive electrode mixture slurry was coated onto the current collector using a plunger-type die coater so as to make a coating amount of 90 mg/cm$^2$.
By drying for 12 hours at 120°C in vacuum and then roll pressing with 5 tons pressure, the positive electrode for lithium ion secondary batteries in which electrode mixture was filled into the pores of the foam aluminum was produced.
The obtained electrode mixture of the positive electrode for lithium ion secondary batteries had a basis weight of 90 mg/cm$^2$, and density of 2.0 g/cm$^3$.
In addition, the total thickness of the current collector and electrode mixture was 452 $\mu$m.

(Production of Lithium Ion Secondary Battery)

Other than using the positive electrode for lithium ion secondary batteries obtained, an electrode laminate in which three layers of the positive electrode and three layers of the negative electrode were stacked was formed similarly to Example 2.
Next, the aluminum foil was laminated on two sides of the current collector region of each positive electrode and the tab lead was bonded with ultrasonic welding, and then copper foil was laminated on two sides of the current collector region of each negative electrode and the tab lead was bonded with ultrasonic welding to produce the lithium ion secondary battery.

<Example 7: Thickness of Negative Electrode Mixture>

(Production of Negative Electrode for Lithium Ion Secondary Batteries)

The negative electrode mixture slurry was produced similarly to Example 1, and the produced negative electrode mixture slurry was coated onto the current collector using a plunger-type die coater so as to make a coating amount of 44.5 mg/cm$^2$.
By drying for 12 hours at 120°C in vacuum and then roll pressing with 1 ton pressure, the negative electrode for lithium ion secondary batteries in which electrode mixture was filled into the pores of the foam copper was produced.
The obtained electrode mixture of the positive electrode for lithium ion secondary batteries had a basis weight of 44.5 mg/cm$^2$, and density of 0.8 g/cm$^3$.
In addition, the total thickness of the current collector and electrode mixture was 583 $\mu$m.

(Production of Lithium Ion Secondary Battery)

Other than using the positive electrode for lithium ion secondary batteries obtained, an electrode laminate in which three layers of the positive electrode and three layers of the negative electrode were stacked was formed similarly to Example 2.
Next, the aluminum foil was laminated on two sides of the current collector region of each positive electrode and the tab lead was bonded with ultrasonic welding, and then copper foil was laminated on two sides of the current collector region of each negative electrode and the tab lead was bonded with ultrasonic welding to produce the lithium ion secondary battery.

<Example 8: Foam Metal Current Collector having only Central Part Electrode Laminate >

(Production of Positive Electrode for Lithium Ion Secondary Batteries (2))

(Preparation of Positive Electrode Mixture Slurry)

The positive electrode mixture slurry was produced similarly to Example 1.

(Formation of Positive Electrode Mixture)

An aluminum foil of 15 $\mu$m thickness was prepared as the current collector.
By coating the produced positive electrode mixture slurry on both sides of the current collector, drying for 10 minutes at a temperature of 135°C, and then roll pressing with 15 tons pressure with a temperature of 130°C, the positive electrode for lithium ion secondary batteries in which the electrode mixture was laminated on both sides of aluminum foil was produced.
The obtained electrode mixture of the positive electrode for lithium ion secondary batteries had a density of 3.2 g/cm$^3$.
In addition, the total thickness of the current collector and electrode mixture was 140 $\mu$m.
Next, as shown in FIG. 1, 8 cm length and 7 cm width of the coated region of the electrode mixture was made the current collector region, and two adjacent sides of the current collector (aluminum foil) of the uncoated region of the electrode mixture contacting this coated region was notch processed to 1.5 cm length x 3 cm width.

(Production of Negative Electrode for Lithium Ion Secondary Batteries (2))

(Preparation of Negative Electrode Mixture Slurry)

The negative electrode mixture slurry was produced similarly to Example 1.

(Formation of Negative Electrode Mixture)

A copper foil of 8 $\mu$m thickness was prepared as the current collector.
By coating the produced negative electrode mixture slurry on both sides of the current collector, drying for 10 minutes at a temperature of 135°C, and then roll pressing with 5 tons pressure at a temperature of 25°C, the negative electrode for lithium ion secondary batteries in which the electrode mixture was laminated on both sides of the copper foil was produced.

The obtained electrode mixture of the positive electrode for lithium ion secondary batteries had a density of 1.5 g/cm$^3$.

In addition, the total thickness of the current collector and electrode mixture was 167 $\mu$m.

Next, 88 mm length and 77 mm width of the coated region of the electrode mixture was made the current collector region, and two adjacent sides of the current collector (copper foil) of the uncoated region of the electrode mixture contacting this coated region was notch processed to 1.5 cm length x 3 cm width, and used as the negative electrode for lithium ion secondary batteries.

(Production of Lithium Ion Secondary Batteries)

A microporous membrane made into a three-layer laminate of polypropylene/ polyethylene/ polypropylene of 25 $\mu$m thickness was prepared as the separator, and punched to a size of 9 cm x 10 cm.

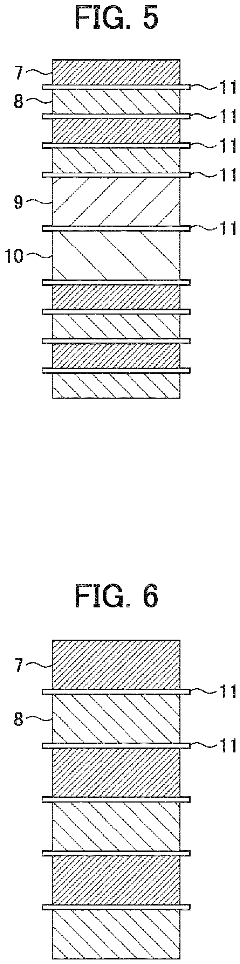

As shown in FIG. 5, the positive electrode for lithium ion secondary batteries (2) and negative electrode for lithium ion secondary batteries (2) obtained as described above, the positive electrode for lithium ion secondary batteries produced in Example 1 (hereinafter called positive electrode for lithium ion secondary batteries (1)) and the negative electrode for lithium ion secondary batteries produced in Example 1 (hereinafter called negative electrode for lithium ion secondary batteries (1)) were stacked in the order of positive electrode (2)/separator/negative electrode (2)/separator/positive electrode (2)/ separator/ negative electrode (2)/separator/ positive electrode (1)/separator/ negative electrode (1)/separator/positive electrode (2)/separator/negative electrode (2)/separator/ positive electrode (2)/separator/negative electrode (2) to produce an electrode laminate (positive electrode (1): one layer; positive electrode (2): four layers, negative electrode (1): one layer, negative electrode (2): four layers).

Next, similarly to Example 2, aluminum foil was laminated on two sides of the current collector region of each positive electrode and tab leads were bonded with ultrasonic welding, and copper foil was laminated on two sides of the current collector region of each negative electrode and tab leads were bonded with ultrasonic welding to produce the lithium ion secondary battery.

<Comparative Example 2: Metal Foil Current Collector having All Electrode Laminate >

(Production of Positive Electrode for Lithium Ion Secondary Batteries (2))

Other than changing the amount of positive electrode mixture slurry coating both sides of the current collector using aluminum foil as the current collector, the positive electrode for lithium ion secondary batteries in which the electrode mixture was laminated on both sides of the aluminum foil was produced similarly to the electrode for lithium ion secondary batteries (2) produced in Example 8.

The obtained electrode mixture of the positive electrode for lithium ion secondary batteries had a density of 3.2 g/cm$^3$.

In addition, the total thickness of the current collector and electrode mixture was 280 $\mu$m.

(Production of Negative Electrode for Lithium Ion Secondary Batteries (2))

Other than changing the amount of positive electrode mixture slurry coating both sides of the current collector using aluminum foil as the current collector, the positive electrode for lithium ion secondary batteries in which the electrode mixture was laminated on both sides of the aluminum foil was produced similarly to the electrode for lithium ion secondary batteries (2) produced in Example 9.

The obtained electrode mixture of the positive electrode for lithium ion secondary batteries had a density of 1.5 g/cm$^3$.

In addition, the total thickness of the current collector and electrode mixture was 300 $\mu$m.

As shown in FIG. 6, using only the above obtained positive electrode for lithium ion secondary batteries (2) and negative electrode for lithium ion secondary batteries (2), they were stacked in the order of positive electrode (2)/separator/ negative electrode (2)/separator/positive electrode (2)/ separator/negative electrode (2)/separator/positive electrode (2)/separator/negative electrode (2) to produce the electrode laminate (positive electrode (2): three layers, negative electrode (2): three layers).

Next, similarly to Example 2, aluminum foil was laminated on two sides of the current collector region of each positive electrode and tab leads were bonded with ultrasonic welding, and copper foil was laminated on two sides of the current collector region of each negative electrode and tab leads were bonded with ultrasonic welding to produce the lithium ion secondary battery.

<Evaluation of Lithium Ion Secondary Batteries>

Various measurements were carried out on the lithium ion secondary batteries obtained in Examples 1 to 8 and Comparative Examples 1 and 2 by way of the following methods.

The results are shown in Tables 1 and 2.

(Thermal Conductivity)

Measurement of the thermal conductivity was conducted with the following measurement conditions by way of a thermal gradient method. More specifically, in a state flowing the measurement heat flow to the obtained lithium ion secondary batteries, it was left until reaching a steady state, and the temperature differential ($\Delta\theta$) of both end faces of the sample at this time was measured.

The thermal conductivity ($\lambda$), using the obtained thermal differential ($\Delta\theta$) of both end faces and thickness of the sample ($\Delta x$), was calculated by applying Fourier's law shown in Formula (1) described below.

(Measurement Conditions)

Direction of Measurement: Sample thickness direction (setting surface layer side as high temperature side)

Measurement temperature: approx. 40°C (heating portion temperature: 90°C, cooling portion temperature: 15°C)

Measurement excess weight: bonding interface pressure 100 kPa

(Fourier's Law)

$$-q = \lambda(\Delta\theta/\Delta x) \quad (1)$$

(In the formula, q is heat flow, $\lambda$ is thermal conductivity, $\Delta\theta$ is temperature differential of both end faces of sample, and $\Delta x$ is thickness of sample.)

The thermal conductivity ($\lambda$) was obtained by the following correction calculation after subtracting the influence of grease.

$$\lambda = q/(\Delta\theta \text{ total sample} - \Delta\theta \text{ grease}) \times \Delta x \text{ sample}$$

(In the formula, q is heat flow, $\Delta\theta$ overall sample is the thermal differential of both end faces of the overall sample, $\Delta\theta$ grease is the temperature decline amount in the grease expressed by the following Formula, and $\Delta x$ sample is thickness of overall sample.)

$$\Delta\theta \text{ grease} = q \times \Delta x \text{ grease}/\lambda \text{ grease}$$

(In the formula, q is heat flow, $\Delta x$ grease is the thickness of the grease, and $\lambda$ is the thermal conductivity of the grease.)

(Energy Density)

The provisional capacity of the positive electrode at a temperature of 25°C was calculated from the active material amount of positive electrode for the produced lithium ion secondary batteries.

Based on the obtained provisional capacity, the electrical current value (0.2C) which can be discharged in 5 hours was determined.

Next, on the produced lithium ion secondary batteries, constant-current charging was performed until 4.2 V at 0.2C, constant-voltage charging was performed for 1 hour at 4.2 V, and then constant-current discharging was performed until 2.4 V at 0.2C.

The capacity upon constant-current discharging was defined as the rated capacity (mAh/g), and the voltage at the time of 1/2 capacity of the rated capacity in the charge/discharge curve at the time of the constant-current discharging obtained was defined as the average voltage (V), and the energy density (Wh/g) was calculated from the following Formula (2).

$$\text{Energy density (Wh/g) = rated capacity (mAh/g) x average voltage (V)}$$

$$(2)$$

With the energy density (Wh/g) of the lithium ion secondary battery of Comparative Example 4 defined as 1, FIG. 8 shows, as the value of a ratio relative to this, the energy density of the lithium ion secondary battery of Example 6.

(Initial Discharge Capacity)

The obtained lithium ion secondary battery was left for 1 hour at the measurement temperature (25°C), constant-current charging was performed until 4.2 V at 0.33C, then constant-voltage charging was performed for 1 hour at a voltage of 4.2 V, and left for 30 minutes, followed by performing discharging until 2.5 V at a discharge rate of 0.2C to measure the discharge capacity.

(Initial Cell Resistance)

The lithium ion secondary batteries after the initial discharge capacity measurement were adjusted to 50% charge level (SOC (State of Charge)).
Next, they were pulse discharged for 10 seconds with a C rate of 0.2C, and the voltage at the time of 10 seconds discharging was measured. Then, the voltage at the time of 10 seconds discharging relative to the electrical current of 0.2C was plotted with the current value as the horizontal axis and the voltage as the vertical axis.
Next, after leaving for 5 minutes, the SOC was returned to 50% by performing auxiliary charging, and then left for 5 more minutes.
Next, the above-mentioned operations were performed for each C rate of 0.5C, 1C, 1.5C, 2C, 2.5C, and the voltages at the time of 10 seconds discharging relative to the electrical current at each C rate were plotted.
Then, the slope of the approximate line obtained from each plot was defined as the initial cell resistance of the lithium ion secondary battery.

(Initial Cell Electron Resistance)

The "initial cell resistance" measured as described above is not only the "electron resistance", but is a value in which "reaction resistance", "ion diffusion resistance", etc. are included. Therefore, "initial cell electron resistance" was obtained by the following method so that the effect of the present invention becomes clear.
In the measurement of the above-mentioned initial cell resistance, from the data upon measuring for 10 seconds at each C rate, the voltage after 0.1 seconds from discharge start was extracted, and the electrical current value at each C rate was plotted on the horizontal axis, and the voltage thereof was plotted on the vertical axis.
Then, the slope of the approximate line obtained from each plot was defined as the 0.1-second resistance value, and the value thereof was defined as the initial cell electron resistance.
Next, the data of the voltage after 1 second from discharge start was extracted, and the electrical current value at each C rate was plotted on the horizontal axis, and the voltage thereof was plotted on the vertical axis.
Then, the slope of the approximate line obtained from each plot was defined as the 1-second resistance value.
In the present invention, the value arrived at by subtracting the 0.1-second resistance value form the 1-second resistance value is defined as the reaction resistance value.
In addition, the value arrived at by subtracting the 1-second resistance value from the initial cell resistance value is defined as the ion diffusion resistance value.

(Capacity Retention)

As the charge/discharge cycle endurance test, an operation of performing constant-current charging until 4.2 V at 1C in a constant temperature bath at 45°C, and then performing constant-current discharging until 2.5 V at a discharge rate of 2C was defined as one cycle, and this operation was repeated for 600 cycles.
After the end of 600 cycles, the endurance discharge capacity was quickly measured similarly to the measurement of the initial discharge capacity, and the endurance discharge capacity in the case of defining the initial discharge capacity as 100% was defined as the capacity retention.

[Table 1]

| | | Example 1 | Comparative example 1 | Example 2 | Example 3 | Example 4 | Example 5 |
|---|---|---|---|---|---|---|---|
| Electrode with foam porous body as current collector | | Both electrodes | Both electrodes | Both electrodes | Both electrode; | Both electrode; | Both electrodes |
| Positive electrode | Type of current collector | Foam aluminum | Foam aluminum | Foam aluminum | Foam aluminum | Foam aluminum | Foam aluminum |
| | Current collector region | 2 sides | 1 side | 2 sides + metal foil | 2 sides + metal foil | 2 sides + metal foil | 2 sides + metal foil |
| | Weight basis of positive electrode mixture (mg/cm2) | 90 | 90 | 90 | 50 | 90 | 90 |
| | Density of positive electrode mixture (g/cm$^3$) | 3.2 | 3.2 | 3.2 | 3.2 | 3.2 | 3.2 |
| | Thickness of electrode ($\mu$m) | 319 | 319 | 319 | 170 | 319 | 319 |
| | Average particle size of activ | 5$\mu$m | 5$\mu$m | 5$\mu$m | 5$\mu$m | 7$\mu$m | 12$\mu$m |
| Negative electrode | Type of current collector | Foam copper | Foam copper | Foam copper | Foam copper | Foam copper | Foam copper |
| | Current collector region | 2 sides | 1 side | 2 sides + metal foil | 2 sides | 2 sides + metal foil | 2 sides + metal foil |
| | Basis weight of negative electrode mixture (mg/cm2) | 44.5 | 44.5 | 44.5 | 25 | 44.5 | 44.5 |
| | Density of negative electrode mixture (g/cm$^3$) | 1.5 | 1.5 | 1.5 | 1.5 | 1.5 | 1.5 |
| | Thickness of electrode ($\mu$m) | 280 | 280 | 280 | 180 | 280 | 280 |
| Thermal conductivity (W/(m·K)) | | 0.63 | 0.49 | 0.66 | 0.66 | 0.60 | 0.55 |
| Energy density | | 630 | 630 | 630 | 550 | 630 | 630 |
| Initial discharge capacity (mAh) | | 1612 | 1611 | 1611 | 1608 | 1610 | 1610 |
| Initial cell resistance (m$\Omega$) | | 55.9 | 60.6 | 51.3 | 50.0 | 49.6 | 106.9 |
| Initial cell electron resistance (mQ) | | 33.6 | 46.0 | 37.0 | 29.5 | 32.7 | 42.8 |
| Capacity retention (%) | | 85% | 78% | 91% | Not conducted | Not conducted | Not conducted |

[Table 2]

| | | Example 6 | Example 7 | Example 8 | Comparative example 2 |
|---|---|---|---|---|---|
| Electrode with foam porous body as current collector | | Both electrodes | Both electrodes | Both electrodes | - |
| Positiv e electro de | Type of current collector | Foam aluminum | Foam aluminum | Foam aluminum | |
| | Current collector region | 2 sides + metal foil | 2 sides + metal foil | 2 sides + metal foil | |
| | Weight basis of positive electrode mixture (mg/cm$^2$) | 90 | 90 | 90 | |
| | Density of positive electrode mixture (g/cm$^3$) | 2.0 | 3.2 | 3.2 | |
| | Thickness of electrode ($\mu$m) | 452 | 319 | 319 | |
| | Average particle size of activ | 5$\mu$m | 5$\mu$m | 5$\mu$m | |
| Negativ e electro de | Type of current collector | Foam copper | Foam copper | Foam copper | |
| | Current collector region | 2 sides + metal foil | 2 sides + metal foil | 2 sides + metal foil | |
| | Basis weight of negative electrode mixture (mg/cm$^2$) | 44.5 | 44.5 | 44.5 | |
| | Density of negative electrode mixture (g/cm$^3$) | 1.5 | 0.8 | 1.5 | |
| | Thickness of electrode ($\mu$m) | 280 | 583 | 280 | |
| Thermal conductivity (W/(m·K)) | | 0.56 | 0.60 | 0.51 | 0.42 |
| Energy density | | 550 | 540 | 550 | 550 |
| Initial discharge capacity (mAh) | | 1612 | 1611 | 1609 | 1602 |
| Initial cell resistance (m$\Omega$) | | 68.4 | 57.9 | 49.5 | 47.0 |
| Initial cell electron resistance (m$\Omega$) | | 41.7 | 36.5 | 34.1 | 40.4 |
| Capacity retention (%) | | Not conducted | Not conducted | 88% | 71% |

To provide an electrode for lithium ion secondary batteries, and a lithium ion secondary battery made using this electrode for lithium ion secondary batteries, which can suppress an increase in electron resistance of a current collector area, and improve heat dissipation, in an electrode for lithium ion secondary batteries establishing a foam metal body as the collector.

In the electrode for lithium ion secondary batteries made using a foam porous body consisting of metal as a current collector, the electrode shape is rectangular, and a current collector region is made to span at least two adjacent sides.

EXPLANATION OF REFERENCE NUMERALS

1 positive electrode for lithium ion secondary batteries
2 separator
3 negative electrode for lithium ion secondary batteries
4 tab lead
5 aluminum foil or copper foil

6 current collector region (foam aluminum)
7 positive electrode for lithium ion secondary batteries (2)
8 negative electrode for lithium ion secondary batteries (2)
9 positive electrode for lithium ion secondary batteries (1)
10 negative electrode for lithium ion secondary batteries (1)
11 separator

## Claims

1. An electrode (1,3) for lithium ion secondary batteries, the electrode (1,3) comprising:

   a current collector; and an electrode mixture containing electrode mixture active material,
   wherein the current collector is a foam porous body consisting of metal,
   wherein the electrode mixture is filled into pores of the foam porous body, and
   wherein the electrode for lithium ion secondary batteries is rectangular when viewed from a thickness direction, and has a current collector region (6) which is formed to extend as a region spanning at least two adjacent sides of the rectangle, and is a region in which the electrode mixture is not filled.

2. The electrode for lithium ion secondary batteries according to claim 1, wherein a current collector tab is connected to the current collector region (6).

3. The electrode for lithium ion secondary batteries according to claim 1 or 2, wherein a metal foil is laminated on the foam porous body in the current collector region (6).

4. The electrode for lithium ion secondary batteries (1,3) according to any one of claims 1 to 3, wherein thickness of the electrode for lithium ion secondary batteries is at least 250 $\mu$m.

5. The electrode for lithium ion secondary batteries (1,3) according to any one of claims 1 to 4, wherein the foam porous body is foam aluminum.

6. The electrode for lithium ion secondary batteries (1) according to claim 5, wherein the electrode for lithium ion secondary batteries is a positive electrode.

7. The electrode for lithium ion secondary batteries (1,3) according to claim 5 or 6, wherein density of the electrode mixture is in the range of 2.5 to 3.8 g/cm$^3$.

8. The electrode for lithium ion secondary batteries (1,3) according to any one of claims 5 to 7, wherein average particle size of the electrode active material is no more than 10 $\mu$m.

9. The electrode for lithium ion secondary batteries (1,3) according to any one of claims 1 to 4, wherein the foam porous body is foam copper.

10. The electrode for lithium ion secondary batteries (3) according to claim 9, wherein the electrode for lithium ion secondary batteries is a negative electrode.

11. The electrode for lithium ion secondary batteries (1,3) according to claim 9 or 10, wherein density of the electrode mixture is in the range of 0.9 to 1.8 g/cm$^3$.

## Patentansprüche

1. Elektrode (1, 3) für Lithiumionen-Sekundärbatterien, wobei die Elektrode (1, 3) aufweist:

   einen Stromsammler (6); und ein ein Elektrodengemisch-Aktivmaterial enthaltendes Elektrodengemisch,
   wobei der Stromsammler ein aus Metall bestehender poröser Schaumkörper ist,
   wobei das Elektrodengemisch in Poren des porösen Schaumkörpers gefüllt ist, und
   wobei die Elektrode für Lithiumionen-Sekundärbatterien, bei Betrachtung aus einer Dickenrichtung, rechteckig ist, und einen Stromsammlerbereich (6) aufweist, der ausgebildet ist, um sich als ein zumindest zwei benachbarte Seiten des Rechtecks überspannender Bereich zu erstrecken, und ein Bereich ist, in den das Elektrodengemisch nicht gefüllt ist.

2. Die Elektrode für Lithiumionen-Sekundärbatterien nach Anspruch 1, wobei eine Stromsammlerzunge mit dem Stromsammlerbereich (6) verbunden ist.

3. Die Elektrode für Lithiumionen-Sekundärbatterien nach Anspruch 1 oder 2, wobei eine Metallfolie auf den porösen Schaumkörper in dem Stromsammlerbereich (6) laminiert ist.

4. Die Elektrode für Lithiumionen-Sekundärbatterien (1, 3) nach einem der Ansprüche 1 bis 3, wobei eine Dicke der Elektrode für Lithiumionen-Sekundärbatterien zumindest 250 $\mu$m beträgt.

5. Die Elektrode für Lithiumionen-Sekundärbatterien (1, 3) nach einem der Ansprüche 1 bis 4, wobei der poröse Schaumkörper Aluminiumschaum ist.

6. Die Elektrode für Lithiumionen-Sekundärbatterien (1) nach Anspruch 5, wobei die Elektrode für Lithiumionen-Sekundärbatterien eine positive Elektrode ist.

7. Die Elektrode für Lithiumionen-Sekundärbatterien (1, 3) nach Anspruch 5 oder 6, wobei eine Dichte des Elektrodengemischs im Bereich von 2,5 bis 3,8 g/cm$^3$ liegt.

8. Die Elektrode für Lithiumionen-Sekundärbatterien (1, 3) nach einem der Ansprüche 5 bis 7, wobei eine durchschnittliche Partikelgröße des Elektrodenaktivmaterials nicht mehr als 10 $\mu$m ist.

9. Die Elektrode für Lithiumionen-Sekundärbatterien (1, 3) nach einem der Ansprüche 1 bis 4, wobei der poröse Schaumkörper Kupferschaum ist.

10. Die Elektrode für Lithiumionen-Sekundärbatterien (3) nach Anspruch 9, wobei die Elektrode für Lithiumionen-Sekundärbatterien eine negative Elektrode ist.

11. Die Elektrode für Lithiumionen-Sekundärbatterien (1, 3) nach Anspruch 9 oder 10, wobei eine Dichte des Elektrodengemischs im Bereich von 0,9 bis 1,8 g/cm$^3$ liegt.

**Revendications**

1. Electrode (1, 3) pour batteries secondaires lithium-ion, l'électrode (1, 3) comprenant :

   un collecteur de courant; et un mélange d'électrode contenant un matériau actif de mélange d'électrode, dans laquelle le collecteur de courant est un corps poreux en mousse se composant de métal, dans laquelle le mélange d'électrode est rempli dans des pores du corps poreux en mousse, et dans laquelle l'électrode pour batteries secondaires lithium-ion est rectangulaire en vue dans une direction d'épaisseur, et comporte une région de collecteur de courant (6) qui est formée pour s'étendre en tant qu'une région couvrant au moins deux côtés adjacents du rectangle, et est une région dans laquelle le mélange d'électrode n'est pas rempli.

2. Electrode pour batteries secondaires lithium-ion selon la revendication 1, dans laquelle une languette de collecteur de courant est reliée à la région de collecteur de courant (6).

3. Electrode pour batteries secondaires lithium-ion selon la revendication 1 ou 2, dans laquelle une feuille métallique est stratifiée sur le corps poreux en mousse dans la région de collecteur de courant (6).

4. Electrode pour batteries secondaires lithium-ion (1, 3) selon l'une quelconque des revendications 1 à 3, dans laquelle une épaisseur de l'électrode pour batteries secondaires lithium-ion est au moins 250 $\mu$m.

5. Electrode pour batteries secondaires lithium-ion (1, 3) selon l'une quelconque des revendications 1 à 4, dans laquelle le corps poreux en mousse est de la mousse d'aluminium.

6. Electrode pour batteries secondaires lithium-ion (1) selon la revendication 5, dans laquelle l'électrode pour batteries secondaires lithium-ion est une électrode positive.

7. Electrode pour batteries secondaires lithium-ion (1, 3) selon la revendication 5 ou 6, dans laquelle une densité du mélange d'électrode est dans la plage de 2,5 à 3,8 g/cm$^3$.

8. Electrode pour batteries secondaires lithium-ion (1, 3) selon l'une quelconque des revendications 5 à 7, dans laquelle une taille moyenne de particule du matériau actif d'électrode est d'au plus 10 $\mu$m.

9. Electrode pour batteries secondaires lithium-ion (1, 3) selon l'une quelconque des revendications 1 à 4, dans laquelle le corps poreux en mousse est de la mousse de cuivre.

10. Electrode pour batteries secondaires lithium-ion (3) selon la revendication 9, dans laquelle l'électrode pour batteries secondaires lithium-ion est une électrode négative.

11. Electrode pour batteries secondaires lithium-ion (1, 3) selon la revendication 9 ou 10, dans laquelle une densité du mélange d'électrode est dans la plage de 0,9 à 1,8 g/cm$^3$.

FIG. 1

FIG. 2

EP 3 809 490 B1

# FIG. 3

3cm

1.5cm

8cm

7cm

# FIG. 4

4
5
6

# FIG. 5

# FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000106154 A
- JP H7099058 A
- JP H8329954 A
- US 2019198883 A1